# EUROPÄISCHE PATENTSCHRIFT

(11) **EP 3 451 089 B1**
(45) Veröffentlichungstag und Bekanntmachung des Hinweises auf die Patenterteilung: **14.10.2020**
(21) Anmeldenummer: 17188185.7
(22) Anmeldetag: 28.08.2017
(51) Int. Cl.: G05B 19/05, G06F 11/36, G06F 8/34

(54) **VERFAHREN ZUM COMPUTERGESTÜTZTEN PROGRAMMIEREN EINER SPEICHERPROGRAMMIERBAREN STEUERUNG**
METHOD FOR CARRYING OUT THE COMPUTER-ASSISTED PROGRAMMING OF A PROGRAMMABLE LOGIC CONTROLLER
PROCÉDÉ DE PROGRAMMATION ASSISTÉE PAR ORDINATEUR D'UNE COMMANDE PAR PROGRAMME ENREGISTRÉ

(43) Veröffentlichungstag der Anmeldung: 06.03.2019
(73) Patentinhaber: Wieland Electric GmbH, 96052 Bamberg (DE)
(72) Erfinder: LUDVIK, Marco, 91325 Adelsdorf (DE); SACHER, Matthias, 95448 Bayreuth (DE); KULBE, Julien, 95448 Bayreuth (DE)
(74) Vertreter: 2K Patentanwälte Blasberg Kewitz & Reichel

(56) Entgegenhaltungen:
- EP-A1- 2 418 583
- EP-A1- 2 713 227
- US-A1- 2008 010 049
- US-B1- 6 366 300

## Beschreibung

Die Erfindung betrifft ein Verfahren zum computergestützten Programmieren einer speicherprogrammierbaren Steuerung, wobei eine Programmieroberfläche auf einem Bildschirm eines Computers dargestellt wird, ein Programm für die speicherprogrammierbare Steuerung erstellt wird, indem auf der Programmieroberfläche Instanzen von Funktionsblöcken durch Verbinden ihrer jeweiligen Signalein- und -ausgänge anhand eines Logikschaltbildes logisch verknüpft werden, auf der Programmieroberfläche das erstellte Programm ausgeführt wird, und ein Datensatz erstellt wird, der die zeitliche Entwicklung der Zustände der Signalein- und -ausgänge während der Ausführung enthält.

Eine speicherprogrammierbare Steuerung (SPS, englisch: Programmable Logic Controller, PLC) ist ein Gerät, das zur Steuerung oder Regelung einer Maschine oder Anlage eingesetzt und auf digitaler Basis programmiert wird. Sie weist im einfachsten Fall Anschlussklemmen (als Eingänge und/oder Ausgänge), ein Betriebssystem (Firmware) und eine Schnittstelle, über die das Programm geladen werden kann, auf. Das Programm legt fest, wie die Ausgänge in Abhängigkeit von den Eingängen geschaltet werden sollen. Das Betriebssystem (Firmware) stellt dabei sicher, dass dem Programm immer der aktuelle Zustand der an die Eingänge angeschlossenen Sensoren zur Verfügung steht. Anhand dieser Informationen kann das Programm die Ausgänge so schalten (und damit die dort angeschlossenen Aktoren so steuern), dass die Maschine oder die Anlage in der gewünschten Weise funktioniert.

Die Anbindung der SPS an die Maschine bzw. Anlage erfolgt mittels der bereits erwähnten Sensoren und Aktoren. Die Sensoren sind an die Eingänge der SPS geschaltet und vermitteln der SPS das Geschehen in der Maschine oder Anlage. Beispiele für Sensoren sind z. B. Taster, Lichtschranken, Inkrementalgeber, Endschalter, oder auch Temperaturfühler, Füllstandssensoren etc. Die Aktoren sind an den Ausgängen der SPS angeschlossen und bieten die Möglichkeit, die Maschine oder Anlage zu steuern. Beispiele für Aktoren sind Schütze zum Einschalten von Elektromotoren, elektrische Ventile für Hydraulik oder Druckluft, aber auch Module für Antriebssteuerungen (Motion Control, Drehzahlsteuerung mit kontrollierter Beschleunigung oder Verzögerung, Schrittmotorsteuerungen).

Die Erstellung des Programms für eine speicherprogrammierbare Steuerung erfolgt häufig über eine sogenannte Funktionsbausteinsprache, engl. "Function Block Diagram" auf einem Computer, wie dies in der Norm EN 61131-3 spezifiziert ist. Hierbei handelt es sich um eine graphisch orentierte Programmiersprache, bei der die Programmlogik auf einer Programmieroberfläche visualisiert wird. Die Programmieroberfläche stellt hierbei eine Menge von Funktionsblöcken mit Signalein- und -ausgängen bereit, die vom Benutzer ausgewählt werden können. Eine oder mehrere Instanzen der Funktionsblöcke werden auf der Programmieroberfläche angeordnet und und durch die Verbindung von Ausgängen mit Eingängen durch Linien in der Art eines Logikschaltbildes verbunden.

Zur Fehlersuche und zur Überprüfung des Ablaufes des Programms ist es bekannt, das erstellte Programm testweise auszuführen, d.h. das erstellte Programm wird ausgeführt, ohne dass durch die dadurch entstehenden Ausgangssignale eine Maschine gesteuert wird. Vielmehr wird nur die logische Verschaltung, d.h. die Wirkung der Eingänge auf die Ausgänge geprüft. Zum Zwecke dieser Überprüfung der logischen Verknüpfung ist es bekannt die Zustände der Signalein- und -ausgänge der Funktionsblöcke, die letztlich den Zuständen auf den Verbindungslinien entsprechen, während der Ausführung aufzuzeichnen und ihren zeitlichen Verlauf in einem Datensatz abzuspeichern. Dadurch kann die Aufzeichnung zu einem späteren Zeitpunkt z.B. erneut abgespielt werden. Derartige Verfahren sind dem Fachmann aus der US 2008/010049 A1 und der EP 2 418 583 A1 bekannt.

Problematisch ist hierbei, dass bei großen und komplexen Logikschaltplänen eine Fehlersuche und -erkennung schwierig ist und ggf. Fehler in der Programmierung nicht oder nur mit großem Aufwand anhand der Aufzeichnung erkannt werden.

Es ist daher Aufgabe der Erfindung, ein Verfahren der eingangs genannten Art anzugeben, welches die Programmierung der Steuerung auf besonders einfache Art und Weise erlaubt und Fehler im Betrieb der speicherprogrammierbaren Steuerung vermeidet.

Diese Aufgabe wird erfindungsgemäß dadurch gelöst, dass aus dem Datensatz eine zeitlich rückwärts navigierbare Darstellung der Entwicklung der Zustände der Signalein- und -ausgänge erstellt und auf der Programmieroberfläche angezeigt wird.

Die Erfindung geht dabei von der Überlegung aus, dass bisher verfügbare Simulationen und deren Darstellungen dem Programmierer den Ablauf des Programms in kausaler Reihenfolge zeigen: Ein bestimmter Eingang ändert seinen Wert, z.B. durch bestimmte Eingangssignale eines Sensors, und anschließend führt dies über verschiedene Programmabläufe in zwischengeschalteten Funktionsblöcken zu bestimmten Ausgangssignalen. Die Simulation zeichnet also die Ereignisse in der Reihenfolge ihres Geschehens auf, d.h. stets zuerst die Ursache, dann die Wirkung. Für den Programmierer ist es im Rahmen der Fehlersuche und des sogenannten Debuggings aber in der Regel entscheidend herauszufinden, welche Ursachen zu einer bestimmten (fehlerhaften) Wirkung geführt haben. Für ihn sind also die ursächlichen Signale und Ereignisse unmittelbar vor dem Eintreten der fehlerhaften Wirkung im Rahmen der Erstellung des Programms entscheidend. Das Auffinden dieser Ursachen sollte daher im Rahmen des Debuggings dadurch erleichtert werden, dass dem Programmierer nach Identifikation der fehlerhaften Wirkung im Anschluss diejenigen Ursachen aufgezeigt werden, die zu dieser Wirkung geführt haben. Hierzu sollte die Reihenfolge von Ursache und Wirkung in der Darstellung umgekehrt werden. Dies ist erreichbar, indem aus dem Datensatz, der die zeitliche Entwickung der Zustände der Signalein- und -ausgänge enthält, eine zeitlich rückwärts navigierbare Darstellung deren Entwicklung erstellt und angezeigt wird. Mit anderen Worten: Auf der Programmieroberfläche wird eine Darstellung erzeugt, die gegenüber dem Ausführungsablauf die Zustände und deren Veränderungen in umgekehrter zeitlicher Reihenfolge anzeigbar macht. Der Benutzer kann den aufgezeichneten Ausführungsablauf des Programmes also nicht nur wie bisher nachverfolgen, dabei allenfalls pausieren, sondern er kann den Programmablauf rückwärts beobachten und beliebig in der in der Zeit vor- und rückwärts springen.

In vorteilhafter Ausgestaltung der Erfindung wird in der Darstellung die Entwicklung der Zustände der Signalein- und -ausgänge zeitlich veränderlich innerhalb des Logikschaltbildes angezeigt. D.h., die während der Ausführung aufgenommene und im Datensatz gespeicherte zeitliche Entwicklung der Zustände der Signalein- und -ausgänge wird wiederum zeitlich veränderlich innerhalb des Logikschaltbildes angezeigt. D.h., beim zeitlich rückwärts Navigieren oder Abspielen des aufgezeichneten Ausführungsablaufes werden die jeweiligen Zustände an den Signalein- und -ausgängen im Logikschaltbild gezeigt, z.B. anhand von Anzeigeflächen in unmittelbarer Nähe der Ein- oder Ausgänge, in denen der zu einem Zeitpunkt jeweils aktuelle Zustand angezeigt wird.

In besonders vorteilhafter Ausgestaltung werden die jeweiligen Zustände dabei mittels einer Farbcodierung der Signalein- und -ausgänge angezeigt. D.h., für jeden Zustand wird ein Farbton festgelegt, z.B. rot für eine logische 0 und grün für eine logische 1, und die Signaleingänge werden jeweils zeitaktuell in den entsprechenden, dem aktuellen Zustand zugeordneten Farben dargestellt. In noch weiterer vorteilhafter Ausgestaltung werden dabei auch die die Ein- und Ausgänge verbindenden Linien im Logikschaltplan in der entsprechenden Farbe angezeigt.

In zusätzlicher oder alternativer Ausgestaltung des Verfahrens wird in der Darstellung die Entwicklung der Zustände der Signalein- und -ausgänge zeitlich veränderlich anhand eines Graphen angezeigt, der den jeweiligen Zustand gegen die Zeit aufträgt. Ein solcher Graph kann bei einer zeitlich rückwärts navigierbaren Darstellung z.B. durch einen Anzeiger gekennzeichnet sein, der den aktuellen Zeitpunkt anzeigt und sich während des Ablaufs in der Zeit rückwärts entlang der Skala bewegt. Auch ein zeitliches Mitlaufen des zeitlichen Skalenausschnitts ist vorteilhaft.

In einer ersten vorteilhaften Ausgestaltung des Verfahrens wird das erstellte Programm mithilfe eines softwarebasierten Emulators ausgeführt. D.h., dass in der Programmiersoftware, die auch die Programmieroberfläche erzeugt, auch ein Emulationsmodul enthalten ist, welches die Hardware und Firmware der speicherprogrammierbaren Steuerung emuliert. Das Programm wird dann in dieses Emulationsmodul geladen und dort ausgeführt - in gleicher Weise wie dies in der realen Steuerung geschehen würde. Auf diese Weise kann der Programmablauf simuliert werden, ohne dass die körperliche Anwesenheit der speicherprogrammierbaren Steuerung erforderlich wäre.

In einer zweiten, alternativen vorteilhaften Ausgestaltung des Verfahrens wird das erstellte Programm ausgeführt, indem das erstellte Programm in die speicherprogrammiere Steuerung überspielt und dort ausgeführt wird, wobei die Zustände der Signalein- und -ausgänge über eine Diagnoseschnittstelle von dem Computer empfangen werden. Das erstellte Programm läuft also in der physisch vorhandenen, speicherprogrammierbaren Steuerung ab. Die dabei erzeugten Zustände der Signalein- und -ausgänge der Funktionsblocks und ihr zeitlicher Ablauf wird dabei über eine Diagnoseschnittstelle an den Computer und die dort ablaufende Programmiersoftware überspielt. Dies kann z.B. per Kabelverbindung oder drahtlos geschehen, idealerweise über denselben Verbindungsweg, mit dem auch das Programm in die Steuerung übertragen wird. Dadurch ist es auch möglich, das erstellte Programm bereits mit realen, physisch vorhandenen und an die Steuerung angeschlossenen Sensoren/Aktoren auszuführen.

In weiterer vorteilhafter Ausgestaltung wird dabei eine Anhaltebedingung definiert und der Datensatz enthält die zeitliche Entwicklung der Zustände der Signalein- und -ausgänge bis zum Erreichen der Anhaltebedingung. Mit anderen Worten: Die Aufnahme der Ausführung des Programms im Datensatz endet bei Erreichen der Anhaltebedingung. Die Anhaltebedingung kann beliebig definiert sein, wird aber in der Regel bestimmte Zustände an bestimmten Ein-/Ausgängen definieren. Eine derartige Ausgestaltung ist besonders vorteilhaft, wenn der Programmierer ermitteln will, welche Programmabläufe zu einem bestimmten Zustand geführt haben. Dieser Zustand wird vom Benutzer als Anhaltebedingung definiert. Die Erstellung des Datensatzes wird dann an der Stelle des Erreichens dieses Zustandes beendet und die zeitlich rückwärts navigierbare Darstellung wird von dieser Stelle an erstellt. Somit ermöglicht die zeitlich rückwärts navigierbare Darstellung ein präzises Nachvollziehen der logischen Schaltvorgänge direkt vor Erfüllen der definierten Anhaltebedingung.

Vorteilhafterweise wird die zeitliche Entwicklung der Zustände der Signalein- und - ausgänge während des Ausführens des erstellten Programms dabei in einem Ringspeicher gespeichert und der Datensatz wird aus dem Inhalt des Ringspeichers bei Erreichen der Anhaltebedingung gebildet. Ein Ringspeicher eignet sich für den hier beschriebenen Zweck in besonderer Weise: Im Ringspeicher werden bei Erreichen des Speichermaximums stets die ältesten Daten überschrieben, d.h. der Ringspeicher enthält stets eine bestimmte Zeitspanne bis zum aktuellen Zeitpunkt der Programmausführung. Damit ist garantiert, dass bei Erreichen der Anhaltebedingung die dazu führenden logischen Programmabläufe stets im Datensatz enthalten sind.

Wird das erstellte Programm mittels der realen speicherprogrammierbaren Steuerung ausgeführt, wird vorteilhafterweise bei Erreichen der Anhaltebedingung der Empfang der Zustände der Signalein- und -ausgänge über eine Diagnoseschnittstelle von dem Computer beendet. D.h., im Moment des Erreichens der Anhaltebedingung wird die Verbindung zur Steuerung getrennt und der weitere Zufluss von Daten beendet. Ab diesem Zeitpunkt wird die zeitlich rückwärts navigierbare Darstellung erstellt und es können die logischen Vorgänge bei rückwärtiger Bewegung durch die Zeit analysiert werden.

Für den Beginn der Ausführung des Programms ist es notwendig, Startbedingungen zu definieren, d.h. Zustände der Signalein- und -ausgänge beim Start der Programmausführung. In einer ersten vorteilhaften Ausgestaltung werden diese aus der speicherprogrammierbaren Steuerung über eine Diagnoseschnittstelle von dem Computer empfangen. D.h., dass die Startbedingungen der realen Steuerung mit den Zuständen angeschlossener Geber etc. auch für die Ausführung des Programms unabhängig vom Ort der Ausführung (im Emulatormodul oder auf der Steuerung selbst) verwendet werden. Der Empfang der Startbedingungen erfolgt dabei idealerweise über dieselbe Schnittstelle, über die auch das Programm in die Steuerung übertragen wird.

In einer zweiten vorteilhaften Ausgestaltung werden die Zustände der Signalein- und -ausgänge beim Start des Ausführens des Programms aus einem Datensatz gebildet werden, der die zeitliche Entwicklung der Zustände der Signalein- und - ausgänge während einer zuvor erfolgten Ausführung des Programms enthält. Mit anderen Worten: Es wird eine Menge von Zuständen als Startbedingung für die neue Simulation verwendet, die zu einem gegebenen Zeitpunkt in einer zuvor durchgeführten Programmausführung bestand. Wenn z.B. durch einen zuvor durchgeführten Programmablauf ein Fehler in der Logikprogrammierung aufgedeckt und korrigiert wurde, kann der neue Programmablauf an einem Punkt kurz vor dem Entstehen des Fehlers mit der korrigierten Logik neu gestartet bzw. weitergeführt werden und es ist unmittelbar erkennbar, ob der Fehler immer noch besteht.

In weiterer vorteilhafter Ausgestaltung werden die Zustände der Signalein- und - ausgänge unmittelbar vor dem Start des Ausführens des Programms durch einen manuellen Benutzereingriff geändert. D.h., dass nach Festlegen der Startbedingungen aus der realen Steuerung oder einer vorherigen Simulation vor dem Start der aktuellen Programmausführung noch ein manueller Benutzereingriff z.B. durch manuelle Änderung einzelner Zustände erfolgen kann. Hierdurch ist es möglich, eine zuvor durchgeführte Programmausführung an einer bestimmten Stelle neu zu starten und mittels gezielter Änderung einzelner Zustände einen alternativen Pfad der Zukunft zu beschreiten und in der oben beschriebenen Weise zu analysieren.

In besonders vorteilhafter Ausgestaltung ist die speicherprogrammierbare Steuerung nach einer Sicherheitsnorm funktional sicher ausgebildet. Gerade bei solchen Steuerungen, die im industriellen Bereich verwendet werden, ist eine Erleichterung der Fehlersuche von besonderer Wichtigkeit: Hier besteht bei Maschinen und deren Steuerung nämlich häufig der Bedarf nach einer Sicherheitsfunktion, d.h. einer Sicherstellung einer störungsfreien und insbesondere gefahrenfreien Funktion. Es handelt sich in der Regel um Maschinen, die Gefahrenpotential für Mensch und Material bergen, d.h. z.B. Pressen, Fräswerkzeuge etc., so dass das Auftreten von Fehlern unbedingt sicher vermieden werden muss. Die wichtigsten Normen im Bereich der Maschinensicherheit sind die IEC 61508, die EN 62061 und die EN ISO 13849-1.

Ein Computerprogrammprodukt, welches direkt in den internen Speicher eines Computers geladen werden kann, umfasst vorteilhafterweise Softwarecodeabschnitte, die, wenn sie auf dem Computer ausgeführt werden, den Computer zum Ausführen des beschriebenen Verfahrens ertüchtigen.

In den internen Speicher eines Computers ist vorteilhafterweise das beschriebene Computerprogrammprodukt geladen.

Die mit der Erfindung erzielten Vorteile bestehen insbesondere darin, dass durch die zeitlich rückwärts navigierbare Darstellung einer Programmausführung während der Programmierung einer Sicherheitssteuerung eine Analyse der zu einem bestimmten Fehler führenden Ursachen ausgehend von der beobachteten Wirkung erfolgen kann. Dadurch kann eine Programmierung der Sicherheitssteuerung schneller, sicherer und fehlerunanfälliger durchgeführt werden.

Ein Ausführungsbeispiel der Erfindung wird anhand von Zeichnungen näher erläutert. Darin zeigen:
- FIG 1: eine schematische Darstellung einer modularen Sicherheitssteuerung,
- FIG 2: eine schematische Darstellung der modularen Sicherheitssteuerung in einer Betriebsart mit einem redundanten Schalter,
- FIG 3: eine schematische Darstellung der Sicherheitssteuerung mit einem zur Programmierung ausgerüsteten digitalen Computer,
- FIG 4: eine schematische Darstellung einer Programmieroberfläche zur Erstellung eines Logikschaltbildes, und
- FIG 5: eine schematische Darstellung einer Programmieroberfläche für eine Echtzeit-Programmausführung.

Gleiche Teile sind in allen Zeichnungen mit denselben Bezugszeichen versehen.

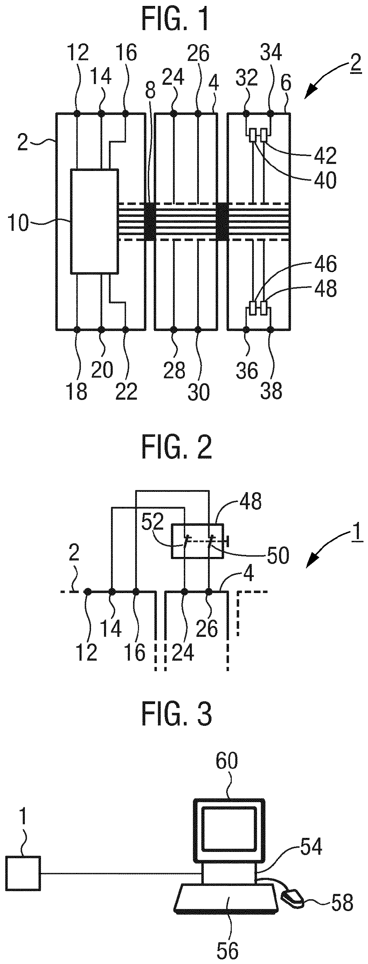

Die FIG 1 zeigt schematisch eine modulare Sicherheitssteuerung 1, umfassend ein Kopfmodul 2, ein Eingangserweiterungsmodul 4 und ein Ausgangserweiterungsmodul 6, die über einen Rückwandbus 8 datenseitig miteinander verbunden sind. Im Kopfmodul 2 ist eine zentrale Steuereinheit 10 angeordnet, die die Eingangssignale verarbeitet und daraus Ausgangssignale erzeugt. Die Sicherheitssteuerung 1 ist eine speicherprogrammierbare Steuerung, die zusätzlich gemäß der Norm EN ISO 13849-1 ausgestaltet, d.h. funktional sicher ist. Dies wird neben anderen Maßnahmen durch die sogenannte überwachte Redundanz gewährleistet, d.h. die Steuereinheit 2 umfasst zwei nicht näher gezeigte, redundant arbeitende Mikrocontroller, deren Ergebnisse permanent abgeglichen und auf Übereinstimmung geprüft werden.

Die Sicherheitssteuerung 1 weist eine Vielzahl von Klemmen 12 - 38 auf, von denen sechs Klemmen 12 - 22 am Kopfmodul 2, vier Klemmen 24 - 30 am Eingangserweiterungsmodul 4 und vier Klemmen 32 - 38 am Ausgangserweiterungsmodul 6 angeordnet sind. Die Steuereinheit 10 kann über den Rückwandbus 8 und ggf. weitere Prozessoreinheiten in den Erweiterungsmodulen 4, 6 jede der Klemmen 12 - 38 ansteuern bzw. abrufen.

Die Klemmen 32 - 38 des Ausgangserweiterungsmoduls 6 können paarweise in die Stromzufuhr zu einem nicht näher gezeigten Aktor geschaltet werden, der einen elektrischen Verbraucher schaltet, der Gefahrenpotential aufweist und daher sicher ausgeschaltet werden soll. Dazu sind in die Verbindung zwischen den Klemmen 32, 34 bzw. 36, 38 jeweils zwei Relais 40, 42 bzw. 44, 46 in Reihe geschaltet. Um den Stromfluss zu erhalten, müssen beide Relais 40, 42 bzw. 44, 46 im geschlossenen Zustand sein, sie sind also redundant. Die Relais 40, 42 bzw. 44, 46 werden von den redundanten Mikrocontrollern der Steuereinheit 10 unabhängig gesteuert.

Um die Funktion des elektrischen Verbrauchers im Gefahrenfall zu unterbrechen oder zumindest zu beeinflussen, sind verschiedene, beispielhaft in der folgenden FIG 2, jedoch nicht in der FIG 1 gezeigte Geber an die Sicherheitssteuerung 1 anschließbar. Diese können z.B. Not-Aus-Schalter, Lichtschranken, Türpositionsschalter etc. sein. Zum Anschluss dieser Geber weist die Sicherheitssteuerung 1 neben den Klemmen 24 - 30 am Eingangserweiterungsmodul 4 auch Klemmen 12 - 22 auf, die die Geber mit Strom versorgen können. An einigen dieser Klemmen 12 - 22 liegt im Ausführungsbeispiel stets eine kleine positive Gleichspannung an, dies ist jedoch nicht zwingend, z.B. bei sog. Open-Collector oder Tri State-Ausgängen. Alternativ können an anderen dieser Klemmen 12 - 22 auch Prüfsignale mit zyklischen, pulsartigen Prüfpulsen zur Leitungs- und Kurzschlussprüfung vorgesehen sein, die jeweils für eine kurze Dauer 0 Volt über der sonst erhaltenen Grundspannung einstellen. Die Prüfpulse können alternativ auch auf einen Trigger wie z.B. eine manuelle oder automatische veranlasste Prüfanfrage hin abgegeben werden. Alle Klemmen 12 - 38 können hardwareseitig beliebig, z.B. als Schraub- oder Federklemmen ausgestaltet sein.

FIG 2 zeigt ein Anwendungsbeispiel der Sicherheitssteuerung 1 im Gutzustand. Dabei wird aus Gründen der Übersichtlichkeit auf die Darstellung sämtlicher Teile der Sicherheitssteuerung 1 verzichtet und es wird nur ein Ausschnitt der Sicherheitssteuerung gezeigt.

FIG 2 zeigt einen Not-Aus-Schalter 48, der zwei redundante Kanäle mit zwei mechanisch verbundenen Schaltern 50, 52 umfasst. Die Schalter 50, 52 sind äquivalent, d.h. beide im Gutzustand geschlossen und im Zustand der Anforderung der Sicherheitsfunktion geöffnet. Hier ist der Not-Aus-Schalter 48 derart mit dem Sicherheitssteuerung 1 verbunden, dass Klemme 16 über den einen der Schalter 50 mit Klemme 26 verbunden ist, Klemme 14 über den anderen der Schalter 52 mit Klemme 24. Auf den Klemmen 24, 26 ergibt sich bei Freigabe somit die Signalkombination Plus, Plus, im Zustand der Anforderung der Sicherheitsfunktion die Signalkombination Null, Null. Andere Signalkombinationen deuten auf einen Fehler hin. In beiden letztgenannten Fällen wird eine Unterbrechung der Stromzufuhr des jeweils durch die noch im Folgenden erläuterte Logikprogrammierung mit dem Not-Aus-Schalter 48 verknüpften Stromkreises im Ausgangserweiterungsmodul 6 veranlasst, beispielsweise zwischen den Klemmen 36 und 38.

Das Beispiel in den FIG 1 und 2 dient nur der Veranschaulichung der Funktionsweise der Sicherheitssteuerung 1 und ist daher stark vereinfacht. In der Realität wird das System weit komplexer sein, d.h. es werden wesentlich mehr Module und Module anderer Art (z.B. sogenannten Gateway-Module für Schnittstellen zu Feldbussen) vorhanden sein, und es werden eine Vielzahl weiterer Klemmen auf verschiedenen Modulen vorhanden sein, die eine Vielzahl von elektrischen Verbrauchern schalten können und an die eine Vielzahl von Gebern und Aktoren verschiedenster Art angeschlossen werden kann. Auch müssen die Klemmen nicht notwendig nur eine Funktion erfüllen sondern können ggf. auch variabel als Ein- oder Ausgangsklemmen verwendet werden.

Die Klemmenbelegung und damit letztlich die an den Klemmen zu erwartenden Signalkombinationen sowie die logische Verknüpfung zwischen den Geber- und Aktorsignalen müssen in der Steuereinheit 10 der Sicherheitssteuerung 1 hinterlegt sein, so dass diese bei entsprechender Signalisierung die Abschaltung der richtigen elektrischen Verbraucher veranlasst. Dies geschieht durch Übergabe einer entsprechenden Konfiguration an eine in der Steuereinheit 10 hinterlegte Firmware. Da die Konfiguration letztlich die gesamten logischen Verknüpfungen zwischen Gebern und Aktoren festlegt, wird sie im Folgenden vereinfachend als Programm bezeichnet.

Die Erstellung dieses Programms erfolgt an einem digitalen Computer 54, der in FIG 3 gezeigt ist. Der Computer 54 weist Eingabegeräte wie eine Tastatur 56 und eine Maus 58 auf sowie einen Bildschirm 60 als Ausgabegerät. Über eine serielle oder parallele Schnittstelle oder z.B. über Ethernet ist er mit der Sicherheitssteuerung 1 verbunden. Auf dem Computer 54 wird durch einen Benutzer auf einer graphischen Programmieroberfläche anhand der angedachten Geber- und Aktorkombination sowie der gewünschten logischen Verknüpfung das Programm erstellt, geprüft und anschließend in die Steuereinheit 10 der Sicherheitssteuerung 1 übertragen. In einer alternativen, nicht gezeigten Ausführungsform kann der digitale Computer 54 auch als Tablet mit Touchscreen ausgestaltet sein. Insofern im Folgenden im Ausführungsbeispiel von Mausklick oder Mausbewegung gesprochen wird, wäre dies im Falle eines Tablets durch Antippen und entsprechendes Ziehen des Fingers durchzuführen.

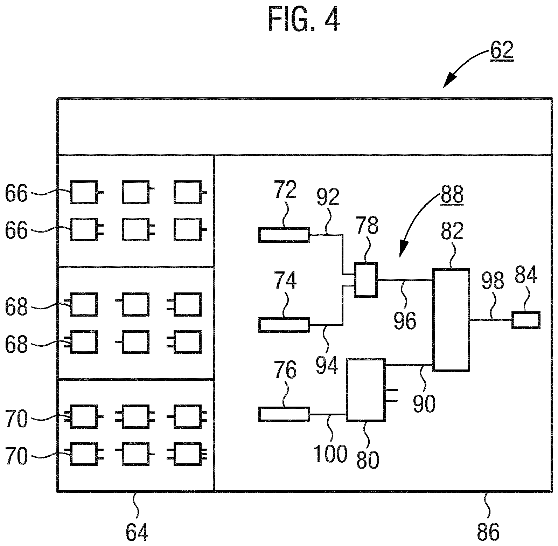

Eine solche, auf einem Bildschirm 60 dargestellte Programmieroberfläche 62 ist in der FIG 4 gezeigt. Die Programmieroberfläche 62 weist einen ersten Teilbereich 64 auf, in dem Funktionsblöcke 66, 68, 70 dargestellt sind. Die Funktionsblöcke 66, 68, 70 sind dabei in drei Gruppen gruppiert. Die erste Gruppe umfasst Funktionsblöcke 66, denen jeweils ein Geber zugeordnet ist, z.B. Not-Aus-Schalter einkanalig, Not-Aus-Schalter zweikanalig etc. Diese Funktionsblöcke 66 symbolisieren ein Eingangssignal eines solchen Gebers, wobei in der Logikprogrammierung die hardwareseitig realisierte Redundanz (siehe oben) bereits nicht mehr für den Benutzer ersichtlich ist, da die Fehlerüberwachung von der Firmware der Sicherheitssteuerung 1 auch ohne gesonderte Programmierung selbst geleistet wird. Der Benutzer soll im Rahmen der Programmierung nur festlegen, wie die Betätigung eines solchen Gebers wirkt. So würde beim in FIG 2 gezeigten zweikanaligen Not-Aus-Schalter, obwohl dieser real zwei redundante Kanäle umfasst, in der Logikprogrammierung auf der Programmieroberfläche 62 nur ein einzelnes Ausgangssignal angezeigt, welches dann in der Logik weiter verknüpft wird.

Entsprechend umfasst die zweite Gruppe von Funktionsblöcke 68 solche Symbole, die Ausgangssignale an Aktoren symbolisieren. Das oben Gesagte gilt hier analog. Die dritte Gruppe umfasst schließlich Funktionsblöcke 70, die Logikbausteine sind. Diese können einfache logische Kombinationen wie "UND" oder "ODER" sein, komplexere Auswerter wie Flip-Flops, Taktgeneratoren oder aber applikationsspezifische Funktionsblöcke 70 für Abschaltverzögerungen, Pressen etc. In nicht gezeigten Ausführungsbeispielen können die Funktionsblöcke 66, 68, 70 auch nach weiteren inhaltlichen Kriterien untergruppiert sein.

Der Benutzer wählt im Rahmen der Logikprogrammierung nun einen Funktionsblock 66, 68, 70 aus. Die Auswahl erfolgt durch Bewegen des nicht näher dargestellten Mauszeigers auf den gewünschten Funktionsblock 66, 68, 70 und einfachen Mausklick auf den jeweils gewünschten Funktionsblock 66, 68, 70. Die Auswahl durch Mausklick führt dazu, dass eine Instanz 72 - 84 des Funktionsblocks 66, 68, 70 erzeugt wird, die an den Mauszeiger angeheftet wird.

Die Instanz 72 - 84 wird erzeugt, da mehrere gleichartige Funktionsblöcke 66, 68, 70 benötigt werden können und daher ggf. mehrfach nacheinander der gleiche Funktionsblock 66, 68, 70 ausgewählt werden muss. Die Instanz 72 - 84 kann in ihrer Darstellung dabei identisch mit dem Funktionsblock 66, 68, 70 sein, muss dies aber nicht. Im Ausführungsbeispiel sind die Instanzen 72 - 84 deutlich breiter und flacher als der Funktionsblock 66, 68, 70, um ggf. Text darauf darzustellen. Enthält der Funktionsblock 66, 68, 70 ein kennzeichnendes Piktogramm, so kann dieses Piktogramm in Ausführungsformen auch auf der Instanz 72 - 84 ggf. vergrößert oder verkleinert, dargestellt werden.

Für die Festlegung der logischen Verknüpfung dient ein im zweiten Teilbereich 86 der Programmieroberfläche 62 dargestelltes, vom Programmierer mithilfe der Instanzen 72 - 84 erstelltes Logikschaltbild 88. Im Logikschaltbild 88 erfolgt die Programmierung anhand graphischer Symbole, die logisch durch Linienzug verknüpft werden. Eingangssignale von Gebern, repräsentiert durch Instanzen 72, 74, 76 aus den Funktionsbausteinsymbolen 66 werden durch Logikbausteine in den Instanzen 78, 80 verarbeitet und in Ausgangssignale für Aktoren, repräsentiert durch Instanz 84, verarbeitet. Die Hinterlegung der Instanzen 72 - 84 erfolgt nach Auswahl der Funktionsblöcke 66, 68, 70 (siehe oben) durch einfaches Drag-and-Drop-Verfahren. Durch einfaches Verbinden der Signalein- und -ausgänge jedes Funktionsblocks 66, 68, 70 mit Linien 90 - 100 können die Signale wie gewünscht weitergeleitet werden. Durch geschickte Auswahl und Kombination von Funktionsblöcken 66, 68, 70 und entsprechende Verbindung der Instanzen 72 - 84 wird somit ein Logikschaltbild 88 erzeugt, das die Schaltlogik definiert. Zusätzlich werden die Klemmenzuordnungen festgelegt, d.h. für solche Funktionsblöcke 66, 68, 70, welche direkte Signale von physikalischen Eingangsklemmen empfangen oder solche Signale für physikalische Ausgangsklemmen der Sicherheitssteuerung 1 erzeugen sollen, wird über eine entsprechende Zuordnung einer Klemmenbezeichnung festgelegt, von welcher Klemme das entsprechende Signal empfangen bzw. an welche Klemme es gesendet werden soll.

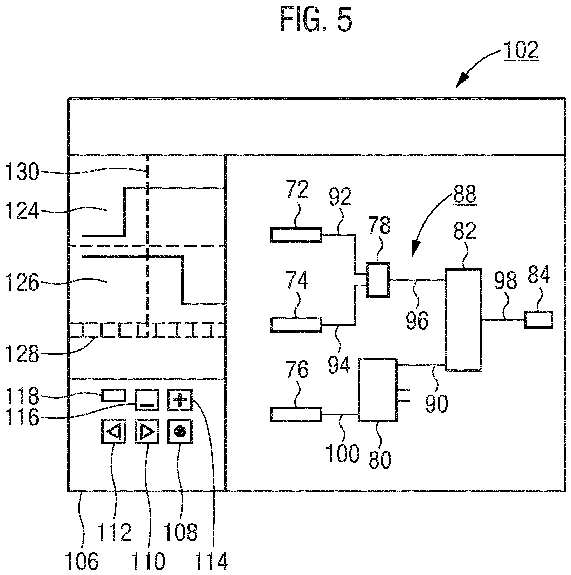

Für größtmögliche Fehlervermeidung und die Möglichkeit der Fehlersuche ermöglicht die auf dem Computer 54 ausgeführte Programmiersoftware eine Echtzeit-Ausführung des erstellten Programms. Hierfür wird eine zweite Programmieroberfläche 102 bereitgestellt, die in FIG 5 gezeigt ist. Auf der zweiten Programmieroberfläche 102 wird in einem ersten, auf der rechten Seite angeordneten Teilbereich 104 das in der ersten Programmieroberfläche 62 erstellte Logikschaltbild 88 dargestellt. In einem zweiten Teilbereich 106 sind Schaltflächen 108, 110, 112 dargestellt, die zur Steuerung und späteren Ansicht einer Echtzeit-Ausführung des durch das Logikschaltbild 88 definierten Programms dienen. Echtzeit-Programmausführung heißt, dass das Verhalten der Sicherheitssteuerung 1 mit dem aufgespielten erstellten Programm während des Betriebs der Sicherheitssteuerung 1 abgebildet wird.

Die Echtzeit-Programmausführung wird durch Mausklick auf die erste, mit einem Kreis markierte Schaltfläche 108 gestartet. Sie kann in der beschriebenen Ausführungsform auf zwei verschiedene Arten durchgeführt werden: Für die erste Art der Echtzeit-Programmausführung ist in der Software, die die Programmieroberflächen 62, 102 erzeugt, ein Emulatormodul enthalten, welches die Funktion der Sicherheitssteuerung 1 abbildet. Signale, die während der Laufzeit z.B. an den Gebern geändert werden sollen, können während des Ablaufs der Simulation durch Mausklick auf die entsprechenden Instanzen 72, 74, 76 simuliert werden. Die Programmlogik führt dann die entsprechenden logischen Konsequenzen, die sich durch das Logikschaltbild 88 an der Instanz 84 ergeben, aus.

Für die zweite Art der Echtzeit-Programmausführung wird das erstellte Programm in der zu FIG 3 beschriebenen Weise in die reale Sicherheitssteuerung 1 überspielt und die Sicherheitssteuerung 1 mit angeschlossenen Gebern und ggf. Aktoren in Betrieb gesetzt. Über die Verbindung über die Schnittstelle hat der Computer 54 diagnoseseitig Zugriff auf die Entwicklung der logischen Zustände im Programm und diese werden in den Computer übertragen. Hierbei können veränderliche Eingangssignale direkt durch Betätigung der Geber oder durch Aufbringen physikalischer Eingangssignale an den Klemmen der Sicherheitssteuerung 1 erzeugt werden.

Die hierbei sich ergebenden zeitlichen Entwicklungen der Zustände an den einzelnen Ein- und -Ausgängen der Funktionsblöcke 66, 68, 70 repräsentierenden Instanzen 72 - 84, d.h. an den Linien 90 - 100 werden während der Programmausführung im Computer 54 in einem Ringspeicher aufgezeichnet und der Inhalt des Ringspeichers wird nach Beenden der Programmausführung in einem Datensatz hinterlegt, so dass z.B. die letzten 30 Minuten der zeitlichen Entwicklung aller Zustände auf den Linien 90 - 100 und ggf. auch internen Zuständen von einzelnen Instanzen 72 - 84 enthalten sind.

Die im Datensatz enthaltene Aufzeichnung der Echtzeit-Programmausführung kann durch den Benutzer durch Mausklick auf eine ein nach rechts gerichtetes Dreieck enthaltende Schaltfläche 110 erneut dargestellt werden. Die Zustände werden dann im Logikschaltbild wieder so dargestellt, wie während der Echtzeit-Programmausführung. Nachteilig ist hierbei, dass der Benutzer üblicherweise die zu einer bestimmten Wirkung führenden Ursachen ermitteln will, die aufgrund der Gesetze der Kausalität vor den Wirkungen liegen.

Zur Lösung dieses Problems weist die Programmieroberfläche 102 im zweiten Teilbereich 106 eine dritte, mit einem nach links gerichteten Dreieck versehene Schaltfläche 112 auf. Ein Mausklick auf diese Schaltfläche 112 führt dazu, dass die Echtzeit-Programmausführung bzw. die Aufnahme der Echtzeit-Programmausführung ausgehend vom Ende der Programmausführung rückwärts abgespielt wird. Die Darstellung ist also zeitlich rückwärts navigierbar. Dadurch kann der Benutzer unmittelbar die zu der am Ende der Echtzeit-Programmausführung vorliegenden Zustandskombination führenden Ursachen ermitteln, da diese in der zeitlich rückwärtigen Darstellung erst folgen.

Im dritten Teilbereich sind weitere Schaltflächen 114, 116 sowie ein Auswahlfeld 118 angeordnet. Mittels der ein Plus-Zeichen zeigenden Schaltfläche 114 kann der Benutzer in diskreten Zeitschritten, deren Größe im Auswahlfeld 118 ausgewählt werden kann (z.B. 500 ms, 1 s, 2 s) vorwärts durch die Aufzeichnung der Simulation springen. Im Sinne der Lösung des genannten Problems kann er mittels einer Schaltfläche 116, die ein Minus-Zeichen zeigt, zeitlich rückwärts diskret in der Aufzeichnung springen. Die zeitlich rückwärtige Navigierung umfasst also einerseits ein Rückwärts-Abspielen als auch ein zeitlich diskretes Springen durch die Aufzeichnung.

Die Darstellung der Zustände in der Aufzeichnung erfolgt im Ausführungsbeispiel mittels einer Farbcodierung. Jedem Zustand ist eine Farbe zugeordnet und während des Abspielens der Simulation wird jede Linie 90 - 100 aktuell nach ihrem tatsächlichen Zustand eingefärbt. Ändert sich während der Programmausführung der Zustand, ändert sich also auch die Farbe in der Aufzeichnung. Da die Linien 90 - 100 stets an einem (oder mehreren) Ein- oder Ausgängen von Instanzen 72 - 84 enden, schließt dies die Einfärbung dieser Signalein- und -ausgänge mit ein.

Zusätzlich können auf der Programmieroberfläche 102 in einem dritten Teilbereich vom Benutzer einzelne Zustände ausgewählt werden, deren zeitliche Entwicklung in Form von Graphen 122, 124 dargestellt ist, die den jeweiligen Zustand gegen die Zeit, dargestellt anhand einer Skala 128, aufträgt. Eine Linie 130 zeigt dabei jeweils den aktuellen Zeitpunkt während des Abspielens der Aufzeichnung, d.h. in der Darstellung. Die Skala 128 bewegt sich mit den Graphen 124, 126 dabei zeitlich vorwärts oder im Sinne der Lösung des oben beschriebenen Problems rückwärts.

Im Rahmen der Echtzeit-Programmausführung können durch den Benutzer in der Programmieroberfläche 102 auch Anhaltebedingungen definiert werden, bei deren Erreichen ein automatischer Stop der Echtzeit-Programmausführung erfolgt. Diese können beispielsweise durch die Festlegung bestimmter Zustände an bestimmten Signalein- oder -ausgängen definiert sein. Erfolgt die Simulation mittels Ankopplung der physikalischen Sicherheitssteuerung 1, wird die Verbindung über die Schnittstelle zum Zeitpunkt des Anhaltens der Programmausführung softwareseitig getrennt. Der Benutzer kann nun zielgenau mittels der Schaltflächen 112, 116 die Ursachen des Erreichens der Anhaltebedingung ermitteln.

Für die Programmausführung werden zudem Startbedingungen definiert, d.h. jedem Signalein- und -ausgang jeder Instanz 72 - 84 wird ein Zustand zugeordnet, bei dem die Echtzeit-Programmausführung beginnt. Dies kann manuell oder mit Default-Werten geschehen. Es können aber auch über die zu FIG 3 beschriebene Schnittstelle aktuelle Werte aus der Sicherheitssteuerung 1 übertragen und auf der Programmieroberfläche 102 eingestellt werden. Alternativ kann eine Zustandsmenge zu einem bestimmten Zeitpunkt einer Aufzeichnung extrahiert werden und als Startbedingungen festgelegt werden.

In beiden Fällen ist es möglich, vor dem erneuten Start der Echtzeit-Programmausführung manuell einzelne Zustände noch einmal zu ändern, so dass ggf. alternative Pfade des Programmablaufs getestet werden können.

### Bezugszeichenliste

- 1: Sicherheitssteuerung
- 2: Kopfmodul
- 4: Eingangserweiterungsmodul
- 6: Ausgangserweiterungsmodul
- 8: Rückwandbus
- 10: Steuereinheit
- 12 - 38: Klemme
- 40 - 46: Relaus
- 48: Not-Aus-Schalter
- 50, 52: Schalter
- 54: Computer
- 56: Tastatur
- 58: Maus
- 60: Bildschirm
- 62: Programmieroberfläche
- 64: erster Teilbereich
- 66, 68, 70: Funktionsbausteinsymbol
- 72 - 84: Instanz
- 86: zweiter Teilbereich
- 88: Logikschaltbild
- 90 - 100: Linie
- 102: Programmieroberfläche
- 104: erster Teilbereich
- 106: zweiter Teilbereich
- 108 - 116: Schaltfläche
- 118: Auswahlfeld
- 120: dritter Teilbereich
- 124, 126: Graph
- 128: Skala
- 130: Linie

## Patentansprüche

1. Verfahren zum computergestützten Programmieren einer speicherprogrammierbaren Steuerung (1), wobei
eine Programmieroberfläche (102) auf einem Bildschirm (60) eines Computers (54) dargestellt wird,
ein Programm für die speicherprogrammierbare Steuerung (1) erstellt wird, indem auf der Programmieroberfläche (102) Instanzen (72 - 84) von Funktionsblöcken (66, 68, 70) durch Verbinden ihrer jeweiligen Signalein- und -ausgänge anhand eines Logikschaltbildes (88) logisch verknüpft werden,
auf der Programmieroberfläche (102) das erstellte Programm in Echtzeit ausgeführt wird,
und ein Datensatz erstellt wird, der die zeitliche Entwicklung der Zustände der Signalein- und -ausgänge während der Ausführung enthält,
**dadurch gekennzeichnet, dass** aus dem Datensatz eine zeitlich rückwärts navigierbare Darstellung der Entwicklung der Zustände der Signalein- und - ausgänge erstellt und auf der Programmieroberfläche (102) angezeigt wird.

2. Verfahren nach Anspruch 1, bei dem in der Darstellung die Entwicklung der Zustände der Signalein- und -ausgänge zeitlich veränderlich innerhalb des Logikschaltbildes (88) angezeigt wird.

3. Verfahren nach Anspruch 2, bei dem die jeweiligen Zustände mittels einer Farbcodierung der Signalein- und -ausgänge angezeigt werden.

4. Verfahren nach einem der vorhergehenden Ansprüche, bei dem in der Darstellung die Entwicklung der Zustände der Signalein- und -ausgänge zeitlich veränderlich anhand eines Graphen (124, 126) angezeigt wird, der den jeweiligen Zustand gegen die Zeit aufträgt.

5. Verfahren nach einem der vorhergehenden Ansprüche, bei dem das erstellte Programm mithilfe eines softwarebasierten Emulators ausgeführt wird.

6. Verfahren nach einem der Ansprüche 1 bis 4, bei dem das erstellte Programm ausgeführt wird, indem das erstellte Programm in die speicherprogrammiere Steuerung (1) überspielt und dort ausgeführt wird, wobei die Zustände der Signalein- und -ausgänge über eine Diagnoseschnittstelle von dem Computer (54) empfangen werden.

7. Verfahren nach einem der vorhergehenden Ansprüche, bei dem eine Anhaltebedingung definiert wird und der Datensatz die zeitliche Entwicklung der Zustände der Signalein- und -ausgänge bis zum Erreichen der Anhaltebedingung enthält.

8. Verfahren nach Anspruch 7, bei dem die zeitliche Entwicklung der Zustände der Signalein- und -ausgänge während des Ausführens des erstellten Programms in einem Ringspeicher gespeichert wird und der Datensatz aus dem Inhalt des Ringspeichers bei Erreichen der Anhaltebedingung gebildet wird.

9. Verfahren nach Anspruch 6 und Anspruch 7 oder 8, bei dem bei Erreichen der Anhaltebedingung der Empfang der Zustände der Signalein- und -ausgänge über eine Diagnoseschnittstelle von dem Computer (54) beendet wird.

10. Verfahren nach einem der vorhergehenden Ansprüche, bei dem die Zustände der Signalein- und -ausgänge beim Start des Ausführens des erstellten Programms aus der speicherprogrammierbaren Steuerung (1) über eine Diagnoseschnittstelle von dem Computer (54) empfangen werden.

11. Verfahren nach einem der Ansprüche 1 bis 9, bei dem die Zustände der Signalein- und -ausgänge beim Start des Ausführens des erstellten Programms aus einem Datensatz gebildet werden, der die zeitliche Entwicklung der Zustände der Signalein- und -ausgänge während einer zuvor erfolgten Ausführung des erstellten Programms enthält.

12. Verfahren nach Anspruch 10 oder 11, bei dem die Zustände der Signalein- und -ausgänge unmittelbar vor dem Start des Ausführens des Programms durch einen manuellen Benutzereingriff geändert werden.

13. Verfahren nach einem der vorhergehenden Ansprüche, bei dem die speicherprogrammierbare Steuerung (1) nach einer Sicherheitsnorm funktional sicher ausgebildet ist.

14. Computerprogrammprodukt, welches direkt in den internen Speicher eines Computers (54) geladen werden kann und Softwarecodeabschnitte umfasst, die, wenn sie auf dem Computer (54) ausgeführt werden, den Computer (54) zum Ausführen des Verfahrens nach einem der vorhergehenden Ansprüche ertüchtigen.

15. Computer (54), in dessen internen Speicher das Computerprogrammprodukt nach Anspruch 14 geladen ist.

## Claims

1. A method for computer-aided programming of a programmable logic controller (1), wherein
a programming interface (102) is displayed on a screen (60) of a computer (54),
a program for the programmable logic controller (1) is created by logically linking instances (72-84) of function blocks (66, 68, 70) on the programming interface (102) by connecting their respective signal inputs and outputs using a logic circuit diagram (88),
on the programming interface (102) the program created is executed in real time, and a data set is created which contains the temporal development of the states of the signal inputs and outputs during execution,
**characterized in that** a representation of the development of the states of the signal inputs and outputs, which can be navigated backwards in time, is generated from the data set and displayed on the programming interface (102).

2. The method according to claim 1, in which the development of the states of the signal inputs and outputs is displayed in the representation as changing over time within the logic circuit diagram (88).

3. The method according to claim 2, in which the respective states are indicated by means of a colour coding of the signal inputs and outputs.

4. The method according to one of the preceding claims, in which the development of the states of the signal inputs and outputs is displayed in the representation as varying over time by means of a graph (124, 126) which plot the respective state against time.

5. The method according to one of the preceding claims, in which the program created is executed by means of a software-based emulator.

6. The method according to one of claims 1 to 4, in which the created program is executed by transferring the created program to the stored-program controller (1) and executing it there, the states of the signal inputs and outputs being received by the computer (54) via a diagnostic interface.

7. The method according to one of the preceding claims, in which a stop condition is defined and the data set contains the temporal development of the states of the signal inputs and outputs until the stop condition is reached

8. The method according to claim 7, in which the temporal development of the states of the signal inputs and outputs during the execution of the created program is stored in a ring buffer and the data set is formed from the contents of the ring buffer when the stop condition is reached.

9. The method according to claim 6 and claim 7 or 8, in which, when the stop condition is reached, the reception of the states of the signal inputs and outputs via a diagnostic interface from the computer (54) is terminated.

10. The method according to one of the preceding claims, in which the states of the signal inputs and outputs are received by the computer (54) via a diagnostic interface from the programmable logic controller (1) when starting the execution of the program created.

11. The method according to one of claims 1 to 9, in which the states of the signal inputs and outputs at the start of the execution of the created program are formed from a data set which contains the temporal development of the states of the signal inputs and outputs during a previous execution of the created program.

12. The method according to claim 10 or 11, in which the states of the signal inputs and outputs are changed immediately before the start of the execution of the program by a manual user intervention.

13. The method according to one of the preceding claims, in which the programmable logic controller (1) is designed to be functionally safe according to a safety standard.

14. A computer program product which can be loaded directly into the internal memory of a computer (54) and comprises software code portions which, when executed on the computer (54), enable the computer (54) to perform the process according to any of the preceding claims.

15. A computer (54) in whose internal memory the computer program product according to claim 14 is loaded.

## Revendications

1. Procédé de programmation assistée par ordinateur d'un automate programmable (1), dans lequel
une interface de programmation (102) est affichée sur l'écran (60) d'un ordinateur (54),
un programme pour le contrôleur logique programmable (1) est créé en reliant logiquement des instances (72-84) de blocs fonctionnels (66, 68, 70) sur l'interface de programmation (102) en connectant leurs entrées et sorties de signaux respectives à l'aide d'un schéma de circuit logique (88),
sur l'interface de programmation (102), le programme créé est exécuté en temps réel,
et un ensemble de données est créé qui contient l'évolution temporelle des états des entrées et sorties de signaux pendant l'exécution,
**caractérisé en ce qu'**une représentation de l'évolution des états des entrées et sorties de signaux, qui peut être parcourue dans le temps, est générée à partir de l'ensemble des données et affichée sur l'interface de programmation (102).

2. Procédé selon la revendication 1, dans laquelle l'évolution des états des entrées et sorties de signaux est représentée dans la représentation comme variant dans le temps à l'intérieur du schéma de circuit logique (88).

3. Procédé selon la revendication 2, dans laquelle les états respectifs sont indiqués au moyen d'un codage couleur des entrées et sorties de signaux.

4. Procédé selon l'une des revendications précédentes, dans laquelle l'évolution des états des entrées et sorties de signaux est représentée dans la représentation comme variant dans le temps au moyen d'un graphique (124, 126) qui trace l'état respectif en fonction du temps.

5. Procédé selon l'une des revendications précédentes, dans laquelle le programme créé est exécuté au moyen d'un émulateur basé sur un logiciel.

6. Procédé selon l'une des revendications 1 à 4, dans laquelle le programme créé est exécuté en transférant le programme créé au contrôleur de programme enregistré (1) et en l'y exécutant, les états des entrées et sorties de signaux étant reçus par l'ordinateur (54) via une interface de diagnostic.

7. Procédé selon l'une des revendications précédentes, dans laquelle une condition d'arrêt est définie et l'ensemble de données contient l'évolution temporelle des états des entrées et sorties de signaux jusqu'à ce que la condition d'arrêt soit atteinte

8. Procédé selon la revendication 7, dans laquelle l'évolution temporelle des états des entrées et sorties de signaux pendant l'exécution du programme créé est stockée dans un tampon circulaire et l'ensemble de données est formé à partir du contenu du tampon circulaire lorsque la condition d'arrêt est atteinte.

9. Procédé selon la revendication 6 et la revendication 7 ou 8, dans laquelle, lorsque la condition d'arrêt est atteinte, la réception des états des entrées et sorties de signaux par l'intermédiaire d'une interface de diagnostic de l'ordinateur (54) est terminée.

10. Procédé selon l'une des revendications précédentes, dans laquelle les états des entrées et des sorties de signaux sont reçus par l'ordinateur (54) via une interface de diagnostic de l'automate programmable (1) lors du démarrage de l'exécution du programme créé.

11. Procédé selon l'une des revendications 1 à 9, dans laquelle les états des entrées et sorties de signaux au début de l'exécution du programme créé sont formés à partir d'un ensemble de données qui contient l'évolution temporelle des états des entrées et sorties de signaux pendant une exécution précédente du programme créé.

12. Procédé selon la revendication 10 ou 11, dans laquelle les états des entrées et sorties de signaux sont modifiés immédiatement avant le début de l'exécution du programme par une intervention manuelle de l'utilisateur

13. Procédé selon l'une des revendications précédentes, dans laquelle le contrôleur logique programmable (1) est conçu pour être fonctionnellement sûr selon une norme de sécurité.

14. Produit de programme informatique qui peut être chargé directement dans la mémoire interne d'un ordinateur (54) et qui comprend des portions de code logiciel qui, lorsqu'elles sont exécutées sur l'ordinateur (54), permettent à l'ordinateur (54) d'effectuer le procédé selon l'une des revendications précédentes.

15. Ordinateur (54) dans la mémoire interne duquel est chargé le produit de programme informatique selon la revendication 14.
